# EUROPEAN PATENT SPECIFICATION

(11) **EP 4 010 264 B1**
(45) Date of publication and mention of the grant of the patent: **14.05.2025**
(21) Application number: 20862669.7
(22) Date of filing: 28.08.2020
(51) Int. Cl.: B65D 51/24, B65D 43/02, B65D 65/46, B65D 81/38

(54) **DOUBLE-WALLED, SLIP FIT COOLER**
KÜHLBOX MIT DOPPELWANDIGER GLEITSITZSTRUKTUR
GLACIÈRE JETABLE À DOUBLE PAROI ET À MONTAGE PAR INSERTION

(30) Priority: 10.09.2019 US 201962898089 P
(43) Date of publication of application: 15.06.2022
(73) Proprietor: Igloo Products Corp., Katy, TX 77494 (US)
(72) Inventor: IYER, Vasanthi, Katy, TX 77494 (US)
(74) Representative: Grosse, Felix Christopher
(86) International application number: PCT/US2020/048504
(87) International publication number: WO 2021/050298

(56) References cited:
- US-A- 4 047 633
- US-A1- 2003 216 492
- US-A1- 2005 109 776
- US-A1- 2010 212 351
- US-A1- 2015 158 656
- US-A1- 2015 344 211
- US-A1- 2015 344 211
- US-A1- 2020 102 139
- US-A1- 2020 140 165
- US-B1- 9 199 782
- US-B1- 9 199 782
- BECK ANDY: "Unveil Revolutionary Reusable Sustainable Consumer Cooler at 2018 Pack Expo In Chicago", VERICOOL INC. - PRESS RELEASE, 12 October 2018 (2018-10-12), XP055805651, Retrieved from the Internet <URL:https://www.businesswire.com/news/home/20181012005038/en/Vericool-Inc-to-Unveil-Revolutionary-Reusable-Sustainable-Consumer-Cooler-at-2018-Pack-Expo-in-Chicago>

## Description

The present invention relates generally to coolers, and more particularly, to a double-walled, slip fit cooler.

Coolers, ice chests, ice boxes, or the like are commonly used to store contents (e.g., food, beverages, etc.) and keep said contents cool. While many coolers are constructed using durable materials intended for repeated use, other coolers have been manufactured to be disposable. Coolers of the disposable variety are conventionally made from polystyrene foam (i.e., Styrofoam).

Problematically, polystyrene is a non-biodegradable solid that resists chemicals otherwise causing the material to break down. Disposal of polystyrene coolers, consequently, can cause significant environmental harm as discarded polystyrene will persist in the environment for centuries. Many cities and counties across the United States have passed regulations banning sale of polystyrene products for this reason. Documents US2015/344211A1, US9199782B1 and US2010/212351A1 disclose disposable coolers.

It is provided a double-walled, slip fit disposable cooler according to claim 1. The examples herein may be better understood by referring to the following description in conjunction with the accompanying drawings in which like reference numerals indicate identically or functionally similar elements, of which:
- Fig. 1A: shows a perspective view of a double-wall, slip fit cooler in accordance with a first embodiment of the present invention;
- Fig. 1B: shows a perspective view of the double-wall, slip fit cooler of Fig. 1A having a lid removed and an inner liner raised in accordance with the first embodiment of the present invention;
- Fig. 1C: shows a cross-sectional view of the double-wall, slip fit cooler of Fig. 1B in accordance with the first embodiment of the present invention;
- Fig. 2: shows a cross-sectional view of the double-wall, slip fit cooler of Fig. 1A without the lid in accordance with the first embodiment of the present invention; and
- Fig. 3: shows a cross-sectional view of the double-wall, slip fit cooler without the lid in accordance with a second embodiment of the present invention.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

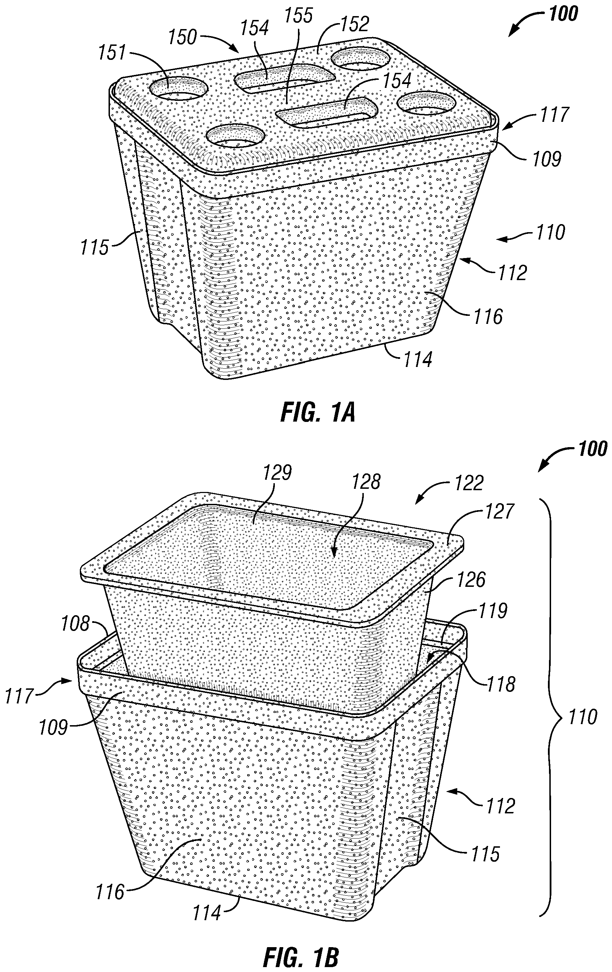

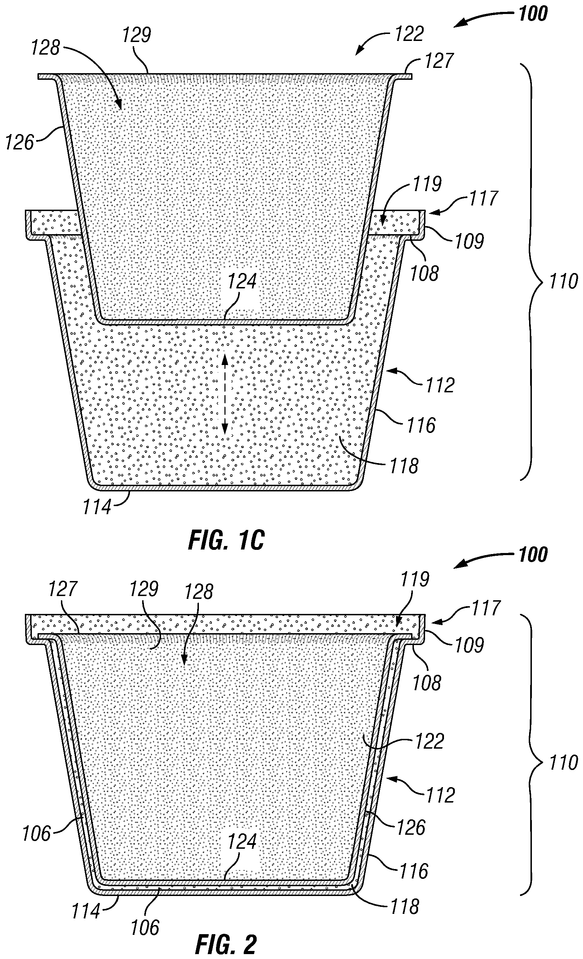

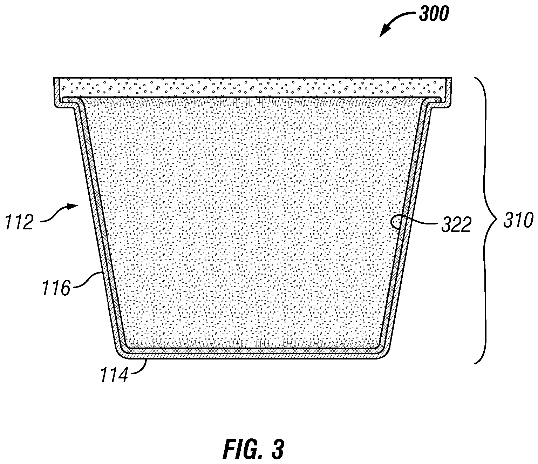

The accompanying figures illustrate various embodiments of the disclosed double-walled, slip fit cooler. As described in detail hereinbelow Fig. 1A shows a perspective view of a double-wall, slip fit cooler in accordance with a first embodiment of the present invention. Fig. 1B shows a perspective view of the double-wall, slip fit cooler of Fig. 1A having a lid removed and an inner liner raised in accordance with the first embodiment of the present invention. Fig. 1C shows a cross-sectional view of the double-wall, slip fit cooler of Fig. 1B in accordance with the first embodiment of the present invention. Fig. 2 shows a cross-sectional view of the double-wall, slip fit cooler of Fig. 1A without the lid in accordance with the first embodiment of the present invention. Fig. 3 shows a cross-sectional view of the double-wall, slip fit cooler without the lid in accordance with a second embodiment of the present invention.

Fig. 1A shows a perspective view of a double-wall, slip fit cooler 100 in accordance with a first embodiment of the present invention. Fig. 1B shows a perspective view of the double-wall, slip fit cooler 100 of Fig. 1A having a lid 150 removed and an inner liner 122 raised in accordance with the first embodiment of the present invention. Fig. 1C shows a cross-sectional view of the double-wall, slip fit cooler 100 of Fig. 1B in accordance with the first embodiment of the present invention. Fig. 2 shows a cross-sectional view of the double-wall, slip fit cooler 100 of Fig. 1A without the lid 150 in accordance with the first embodiment of the present invention. Referring to Figs. 1A-2, the double-walled, slip fit disposable cooler 100 will be described in accordance with the first embodiment of the present invention.

The double-walled, slip fit cooler 100 includes a body 110 and a lid 150 according to some exemplary embodiments. However, the doubled-walled, slip fit cooler 100 may include additional features, such as a strap to be used as a handle, without departing from the scope and spirit of the exemplary embodiment. The body 110 includes an outer shell 112 and an inner liner 122 disposed substantially within the outer shell 112. Each of the outer shell 112 and the inner liner 122 are made entirely of a disposable, biodegradable and/or recyclable material, such as a pulp-based material, paper, sugar cane, hemp, bamboo, or similar type material according to some exemplary embodiments, but one or more of the outer shell 112 and the inner liner 122 can be made of a different material.

The outer shell 112 includes a base 114, a plurality of support walls 116 coupled to the base 114, and a lip 117 extending substantially horizontally and then upwardly from the distal ends of the support walls 116 away from the base 114. According to the exemplary embodiment, the outer shell 112 is fabricated as a single component that is continuous and seamless. However, in other exemplary embodiments, at least one of the plurality of support walls 116 may be attached to an edge of the base 114 or to another support wall 116, such as by an adhesive or some other similar attachment mechanism. At least one of the support walls 116 can include an entirely planar surface. That is, the support walls 116 can be formed such that the surface of at least one support wall 116 is disposed entirely in a single plane. In one example, two support walls 116 disposed on opposite sides of the base 114 can include entirely planar surfaces, respectively, while two other support walls 116 disposed on opposite sides of the base 114, each of which is substantially perpendicular to the two entirely planar support walls 116, can include non-entirely planar surfaces, respectively. For example, the two oppositely disposed, non-planar surface support walls 116 includes a channel 115 extending centrally from the lower end of the support wall 116 to the upper end of the support wall 116 where the lip 117 is formed. This channel 115, in combination with the lip 117, facilitates a user in lifting and transporting the cooler 100 from one location to another. The support walls 116 and the base 114 can define an interior cavity 118 of the outer shell 112. The support walls 116 can extend upwardly from the base 114 to form an opening 119 at an upper terminus of the outer shell 112. The opening 119 can be in fluid communication with the interior cavity 118 of the outer shell 112. In some embodiments, the lip 117 includes a horizontal lip wall 108 and a vertical lip wall 109. The horizontal lip wall 108 extends outwardly away from the opening 119 at the distal end of each support wall 116; however, in other embodiments, the horizontal lip wall 108 may extend inwardly into the opening 119 at the distal end of each support wall 116. The vertical lip wall 109 extends substantially upward away from the base 114 at the end of the horizontal lip wall 108 when the horizontal lip wall 108 extends outwardly away from the opening 119 at the distal end of each support wall 116. However, in embodiments where the horizontal lip wall 108 extends inwardly into the opening 119 at the distal end of each support wall 116, the vertical lip wall 109 continues to extend upwardly along each of the support walls 116 away from the base 114 at the location where the distal end of each of the support walls 114 meet with the horizontal lip wall 108.

Similarly, the inner liner 122 includes a base 124, a plurality of support walls 126 coupled to the base 124, and a lip 127 extending substantially horizontally from the support walls 126 at a distal end from the base 124. According to the exemplary embodiment, the inner liner 122 is fabricated as a single component that is continuous and seamless. However, in other exemplary embodiments, at least one of the plurality of support walls 126 may be attached to an edge of the base 124 or to another support wall 126, such as by an adhesive or some other similar attachment mechanism. At least one of the support walls 126 can include an entirely planar surface. That is, the support walls 126 can be formed such that the surface of at least one support wall 126 is disposed entirely in a single plane. In one example, two support walls 126 disposed on opposite sides of the base 124 can include entirely planar surfaces, respectively, while two other support walls 126 disposed on opposite sides of the base 124, each of which is substantially perpendicular to the two entirely planar support walls 126, can include non-entirely planar surfaces, respectively. The support walls 126 and the base 124 can define an interior cavity 128 of the inner liner 122. The support walls 126 can extend upwardly from the base 124 to form an opening 129 at an upper terminus of the inner liner 122. The opening 129 can be in fluid communication with the interior cavity 128 of the inner liner 122. In some embodiments, the lip 127 extends outwardly away from the opening 129 at the distal end of each support wall 126.

Once the inner liner 122 is disposed into the interior cavity 118 of the outer shell 112, such that the inner liner's base 124 is positioned adjacent the outer shell's base 114, the inner liner's lip 127 is aligned with, sitting atop of, and is supported by the outer shell's lip 117, and in particular, the horizontal lip wall 108 according to some exemplary embodiments. The inner liner's lip 127 is not coupled to the outer shell's lip 117, i.e. the outer shell's horizontal lip wall 108; and therefore, the inner liner 112 is removable from the outer shell 112. This feature of having the inner liner 122 removable from the outer shell 112 allows an end-user to easily clean those components and also replace either of the components that may require replacing in the future without the need to purchase an entire cooler 100. Also, once the inner liner 122 is disposed into the interior cavity 118 of the outer shell 112, such that the inner liner's base 124 is positioned adjacent the outer shell's base 114, a portion of the outer shell's interior cavity 118, which can be referred to as an air gap 106, remains disposed between the outer shell's support walls 116 and the inner liner's support walls 126 and also between the outer shell's base 114 and the inner liner's base 124. This air gap 106 may be empty, i.e. filled with air, or may be filled with some other material that can prevent or reduce heat transfer from the inner liner's interior cavity 128 to the exterior of the outer shell 112. This air gap 106 maximizes cooling performance.

In some other exemplary embodiments, the inner liner 122 is disposed into the interior cavity 118 of the outer shell 112, where at least one of the inner liner's base 124 and/or the inner liner's support wall 126 is contact with the outer shell's base 114 and/or the outer shell's support walls 116. In these embodiments, the inner liner's lip 127 is disposed above the outer liner's lip 117 and is not in contact with the outer shell's lip 117, thereby defining a space between the inner liner's lip 127 and the outer shell's lip 117 when the inner liner 122 is disposed within the outer shell 112. Further, in some of these embodiments, the inner liner 122 may not have a lip 127 since the inner liner's lip 127 is not needed to rest upon the outer liner's lip 117. In the embodiments described within this paragraph, the air gap 106 may or may not be formed between the inner liner's base 124 and the outer shell's base 114 and or between the inner liner's support walls 126 and the out shell's support wall 116.

The cooler 100 can further include a lid 150 capable of covering or substantially covering the inner liner's opening 129. In this regard, the lid 150 can be configured to reversibly couple with the body 110 of the cooler 100 in any of a variety of ways, some of which are described herein. The lid 150 can be shaped in conformity with the inner liner's opening 129, where it rests upon the inner liner's lip 127 and inside of the outer shell's vertical lip wall 109. Alternatively, the lid 150 may be formed so as to cover and sit atop and around the outer shell's lip 117. According to some embodiments, the lid 150 is made entirely of a disposable, biodegradable and/or recyclable material, such as a pulp-based material, paper, sugar cane, hemp, bamboo, or similar type material. According to the exemplary embodiment, the lid 150 is single-walled and includes an outer wall surface 152 and an inner wall surface (not shown); however, in other embodiments, the lid 150 may be double-walled. In the present embodiment, the outer wall surface 152 can be formed to include various features. For instance, the lid's outer wall surface 152 can be formed with one or more cup holders 151. The one or more cup holders 151 can be formed into the outer wall surface 152 in any suitable configuration. Characteristics such as the dimensions, positioning, and number of the one or more cup holders 151 can vary. Further, the lid 150 may include two or more centrally formed indentations 154 that forms a handle 155 that an end-user can use to place the lid 150 onto the body 110 of the cooler 100 or to remove the lid 150 from the body 110 of the cooler 100.

Notably, the outer shell 112, the inner liner 122, and the lid 150 of the cooler 100 can be made entirely of a disposable, biodegradable and/or recyclable material, such as a pulp-based material. Alternatively, one or more of the above referenced components can be made entirely of a disposable, biodegradable and/or recyclable material, such as a pulp-based material, and one or more of the remaining components can be made of a non-biodegradable and/or non-recyclable material, such as a plastic, other polymer material, or other known material type that can be used for coolers.

Pulp, as is generally known in the art, is a fibrous material prepared by chemically or mechanically separating cellulose fibers from wood, recycled paper, straw, grass, or other raw fibrous materials.

Pulp is understood to be more eco-friendly than polystyrene, as pulp can be biodegradable (i.e., capable of disintegrating into an innocuous material), recyclable (i.e., capable of being reused or treated for reuse), and/or compostable (i.e., capable of decomposing within 90-180 days), without release of toxic residues upon decomposition.

In some cases, the pulp-based material from which the cooler 100 is made can derive entirely from pre-consumer recycled paper. In other cases, the pulp-based material from which the cooler 100 is made can derive from a combination of the recycled paper and a wax additive (e.g., paraffin wax) added to enhance the water resistance of the cooler 100. In yet other cases, a small amount of rosin (a solid form of resin) can be added to the pulp-based material to enhance the cooler's durability. It is understood, however, that the pulp-based material can be derived from any suitable pulp-producing materials generally known in the art. Additionally, any one or more of the outer shell 112, the inner liner 122, and the lid 150 can be formed from other disposable, biodegradable and/or recyclable material such as paper, sugar cane, hemp, jute, bamboo, and other similar type materials.

Fig. 3 shows a cross-sectional view of the double-wall, slip fit cooler 300 without the lid 150 (Fig. 1A) in accordance with a second embodiment of the present invention. Referring to Fig. 3, the double-wall, slip fit disposable cooler 300 will be described in accordance with the second embodiment of the present invention.

The double-walled, slip fit disposable cooler 300 includes a body 310 and the lid 150 (Fig. 1A). The cooler 300 is similar to cooler 100 (Fig. 1A) except for a few differences as discussed herein.

The body 310 includes the outer shell 112 and an inner liner 322. The outer shell 112 of cooler 300 is similar to the outer shell 112 (Fig. 1A) of cooler 100 (Fig. 1A) and therefore is not described in further detail herein. The inner liner 322 of cooler 300 is similar to the inner liner 122 (Fig. 1B) of cooler 100 (Fig. 1B); however, inner liner 322 is dimensioned such that when inner liner 322 is disposed within outer shell 112, there are no air gaps therebetween and the inner liner 322 is in direct contact with the base 114 and the plurality of support walls 116 of the outer shell 112. The absence of the air gap between the inner liner 322 and the outer shell 112 maximizes the strength and stability of the cooler 300.

Accordingly, the double-walled, slip fit disposable cooler described herein can be made of a disposable, biodegradable and/or recyclable material, such as a pulp-based material, that is compostable, recyclable, and/or biodegradable. As a result, the cooler can be disposed in an eco-friendly manner in which the cooler disintegrates in a compost environment rapidly relative to conventional polystyrene coolers and without leaving toxicity into the soil. The disposable, biodegradable and/or recyclable material, such as a pulp-based material, used for fabricating the double-walled, slip fit cooler described herein can comply with modern regulations prohibiting sale of polyethylene products, while providing consumers with a storage solution that is disposable via biodegradation and/or recyclability. Moreover, the double-walled, slip fit disposable cooler described herein can include convenient features such as cup holders, handles, and the like, and reliably retain water for several days upon adding a wax additive to the pulp-based material used to construct the cooler.

### REFERENCE SIGNS

- 100, 300: Double-walled, slip fit disposable cooler
- 106: Air gap
- 108: Horizontal lip wall
- 109: Vertical lip wall
- 110, 310: Body
- 112: Outer shell
- 114: Base
- 115: Channel
- 116: Support wall
- 117: Lip
- 118: Interior cavity
- 119: Opening
- 122, 322: Inner liner
- 124: Base
- 126: Support wall
- 127: Lip
- 128: Interior cavity
- 129: Opening
- 150: Lid
- 151: Cup holder
- 152: Outer wall surface
- 154: Indentation
- 155: Handle

## Claims

1. A double-walled, slip fit disposable cooler (100, 300) comprising:
a body (110, 310) comprising:
an outer shell (112) comprising a base (114), a plurality of support walls (116) coupled to the base (114), and a lip (117) formed at the distal ends of the support walls (116) away from the base (114), the base (114) and the plurality of support walls (116) defining an interior cavity (118) therein; and
an inner liner (122, 322) comprising a base (124), a plurality of support walls (126) coupled to the base (124), and a lip (127) extending substantially horizontally from the support walls (126) at a distal end from the base (124), the base (124) and the plurality of support walls (126) defining an interior cavity (128) therein and forming an opening (129) at the upper terminus of the plurality of support walls (126), wherein the inner liner (122, 322) is removably disposed within the outer shell (112) and the inner liner's lip (127) is set atop of and supported by a portion of the outer shell's lip (117); and
a lid (150) substantially covering the opening (129) of the inner liner (122, 322)
**characterized in that**
at least one of the body (110, 310) and the lid (150) are made entirely of a disposable,
biodegradable and recyclable pulp-based material.

2. The double-walled, slip fit disposable cooler (100, 300) of claim 1, wherein one or more of the plurality of support walls (116) are continuously and seamlessly coupled to the base (114).

3. The double-walled, slip fit disposable cooler (100, 300) of claim 1, wherein the outer shell (112) is fabricated as a single component and is continuous and seamless.

4. The double-walled, slip fit disposable cooler (100, 300) of claim 1, wherein the inner liner (122, 322) is fabricated as a single component and is continuous and seamless.

5. The double-walled, slip fit disposable cooler (100, 300) of claim 1, wherein the lid (150) is formed so as to fit inside the lip (117) of the outer shell (112) and cover the opening (129) of the inner liner (122, 322).

6. The double-walled, slip fit disposable cooler (100, 300) of claim 1, wherein the lip (127) of the inner liner (122, 322) extends outwardly away from the interior cavity (128) of the inner liner (122, 322) and the lip (117) of the outer shell (112) comprises:
a horizontal lip wall (108) extending horizontally from the distal ends of each of the support walls (116) of the outer shell (112) and outwardly away from the interior cavity (118) of the outer shell (112); and
a vertical lip wall (109) extending vertically from the end of the horizontal lip wall (108).

7. The double-walled, slip fit disposable cooler (100, 300) of claim 1, wherein the lid (150) is formed such that outer edges thereof are substantially flush with the lip (117) of the outer shell (112) when the lid (150) at least substantially covers the opening (129) of the inner liner (122, 322).

8. The double-walled, slip fit disposable cooler (100, 300) of claim 1, wherein an outer surface of the lid (150) comprises one or more cup holders (151).

9. The double-walled, slip fit disposable cooler (100, 300) of claim 1, wherein the disposable, biodegradable and/or recyclable material is a pulp-based material derived from recycled paper.

10. The double-walled, slip fit disposable cooler (100, 300) of claim 1, wherein the disposable, biodegradable and/or recyclable material is a pulp-based material made with a combination of recycled paper and wax.

11. The double-walled, slip fit disposable cooler (100, 300) of claim 1, wherein the disposable, biodegradable and/or recyclable material is a pulp-based material that includes a wax additive.

12. The double-walled, slip fit disposable cooler (100, 300) of claim 1, wherein the disposable, biodegradable and/or recyclable material is a pulp-based material that is compostable.

13. The double-walled, slip fit disposable cooler (100) of claim 1, wherein an air gap (106) is formed between the inner liner (122) and the outer shell (112) once the inner liner (122) is disposed within the outer shell (112) and the lip (127) of the inner liner (122) is sitting atop and resting on a horizontal portion of the lip (117) of the outer shell (112).

14. The double-walled, slip fit disposable cooler (300) of claim 1, wherein the base (124) and the plurality of support walls (126) of the inner liner (322) is in contact with the base (114) and the plurality of support walls (116) of the outer shell (112) once the inner liner (322) is disposed within the outer shell (112).

15. The double-walled, slip fit disposable cooler (300) of claim 14, wherein the lip (127) of the inner liner (322) is sitting atop and resting on a horizontal portion of the lip (117) of the outer shell (112).

16. The double-walled, slip fit disposable cooler (100, 300) of claim 1, wherein the lid (150) covers and sits atop and around the lip (117) of the outer shell (112).

17. The double-walled, slip fit disposable cooler (100, 300) of claim 1, wherein the lip (127) of the inner liner (122) is not in contact with the lip (117) of the outer shell (112), thereby defining a space between the lip (127) of the inner liner (122) and the lip (117) of the outer shell (112) when the inner liner (122) is disposed within the outer shell (112).

## Patentansprüche

1. Eine doppelwandige Einwegkühlbox mit Gleitsitzstruktur (100, 300) umfassend:
einen Körper (110, 310) umfassend:
eine Außenschale (112), die eine Basis (114), eine Vielzahl von Stützwänden (116), die mit der Basis (114) verbunden sind, und eine Lippe (117) umfasst, die an den von der Basis (114) distalen Enden der Stützwände (116) weg ausgebildet ist, wobei die Basis (114) und die Vielzahl von Stützwänden (116) einen inneren Hohlraum (118) darin definieren; und
eine innere Auskleidung (122, 322), die eine Basis (124), eine Vielzahl von Stützwänden (126), die mit der Basis (124) verbunden sind, und eine Lippe (127) umfasst, die sich im Wesentlichen horizontal von den Stützwänden (126) an einem von der Basis (124) distalen Ende erstreckt, die Basis (124) und die Vielzahl von Stützwänden (126) einen inneren Hohlraum (128) darin definieren und eine Öffnung (129) am oberen Ende der Vielzahl von Stützwänden (126) bilden,
wobei die innere Auskleidung (122, 322) herausnehmbar innerhalb der Außenschale (112) angeordnet ist und die Lippe (127) der inneren Auskleidung auf einen Teil der Lippe (117) der Außenschale aufgesetzt ist und von diesem gestützt wird; und
einen Deckel (150), der die Öffnung (129) der inneren Auskleidung (122, 322) im Wesentlichen abdeckt,
**dadurch gekennzeichnet, dass**
mindestens einer der Körper (110, 310) und der Deckel (150) vollständig aus einem biologisch abbaubaren und recycelbaren Einwegmaterial auf Zellstoffbasis hergestellt ist.

2. Die doppelwandige Einwegkühlbox mit Gleitsitzstruktur (100, 300) nach Anspruch 1, wobei eine oder mehrere der Vielzahl von Stützwänden (116) kontinuierlich und nahtlos mit der Basis (114) verbunden sind.

3. Die doppelwandige Einwegkühlbox mit Gleitsitzstruktur (100, 300) nach Anspruch 1, wobei die Außenschale (112) als ein einziges Bauteil hergestellt ist und durchgehend und nahtlos ist.

4. Die doppelwandige Einwegkühlbox mit Gleitsitzstruktur (100, 300) nach Anspruch 1, wobei die innere Auskleidung (122, 322) als ein einziges Bauteil hergestellt ist und durchgehend und nahtlos ist.

5. Die doppelwandige Einwegkühlbox mit Gleitsitzstruktur (100, 300) nach Anspruch 1, wobei der Deckel (150) so geformt ist, dass er in die Lippe (117) der Außenschale (112) passt und die Öffnung (129) der inneren Auskleidung (122, 322) abdeckt.

6. Die doppelwandige Einwegkühlbox mit Gleitsitzstruktur (100, 300) nach Anspruch 1, wobei sich die Lippe (127) der inneren Auskleidung (122, 322) vom inneren Hohlraum (128) der inneren Auskleidung (122, 322) weg nach außen erstreckt und die Lippe (117) der Außenschale (112) folgendes umfasst:
eine horizontale Lippenwand (108), die sich horizontal von den distalen Enden jeder der Stützwände (116) der Außenschale (112) und nach außen weg von dem inneren Hohlraum (118) der Außenschale (112) erstreckt; und
eine vertikale Lippenwand (109), die sich vertikal von dem Ende der horizontalen Lippenwand (108) erstreckt.

7. Die doppelwandige Einwegkühlbox mit Gleitsitzstruktur (100, 300) nach Anspruch 1, wobei der Deckel (150) so geformt ist, dass seine Außenkanten im Wesentlichen bündig mit der Lippe (117) der Außenschale (112) sind, wenn der Deckel (150) die Öffnung (129) der inneren Auskleidung (122, 322) zumindest im Wesentlichen abdeckt.

8. Die doppelwandige Einwegkühlbox mit Gleitsitzstruktur (100, 300) nach Anspruch 1, wobei eine Außenfläche des Deckels (150) einen oder mehrere Becherhalter (151) umfasst.

9. Die doppelwandige Einwegkühlbox mit Gleitsitzstruktur (100, 300) nach Anspruch 1, wobei das biologisch abbaubare und/oder recycelbare Einwegmaterial ein Material auf Zellstoffbasis ist, das aus recyceltem Papier gewonnen wird.

10. Die doppelwandige Einwegkühlbox mit Gleitsitzstruktur (100, 300) nach Anspruch 1, wobei das biologisch abbaubare und/oder recycelbare Einwegmaterial ein Material auf Zellstoffbasis ist, das aus einer Kombination von recyceltem Papier und Wachs hergestellt ist.

11. Die doppelwandige Einwegkühlbox mit Gleitsitzstruktur (100, 300) nach Anspruch 1, wobei das biologisch abbaubare und/oder recycelbare Einwegmaterial ein Material auf Zellstoffbasis ist, das einen Wachszusatz enthält.

12. Die doppelwandige Einwegkühlbox mit Gleitsitzstruktur (100, 300) nach Anspruch 1, wobei das biologisch abbaubare und/oder recycelbare Einwegmaterial ein Material auf Zellstoffbasis ist, das kompostierbar ist.

13. Die doppelwandige Einwegkühlbox mit Gleitsitzstruktur (100, 300) nach Anspruch 1, wobei ein Luftspalt (106) zwischen der inneren Auskleidung (122) und der Außenschale (112) gebildet wird, sobald die innere Auskleidung (122) in der Außenschale (112) angeordnet ist und die Lippe (127) der inneren Auskleidung (122) auf einem horizontalen Abschnitt der Lippe (117) der Außenschale (112) sitzt und darauf aufliegt.

14. Die doppelwandige Einwegkühlbox mit Gleitsitzstruktur (100, 300) nach Anspruch 1, wobei die Basis (124) und die Vielzahl von Stützwänden (126) der inneren Auskleidung (322) mit der Basis (114) und der Vielzahl von Stützwänden (116) der Außenschale (112) in Kontakt sind, sobald die innere Auskleidung (322) in der Außenschale (112) angeordnet ist.

15. Die doppelwandige Einwegkühlbox mit Gleitsitzstruktur (100, 300) nach Anspruch 14, wobei die Lippe (127) der inneren Auskleidung (322) auf einem horizontalen Abschnitt der Lippe (117) der Außenschale (112) sitzt und darauf aufliegt.

16. Die doppelwandige Einwegkühlbox mit Gleitsitzstruktur (100, 300) nach Anspruch 1, wobei der Deckel (150) die Lippe (117) der Außenschale (112) bedeckt und auf ihr sitzt.

17. Die doppelwandige Einwegkühlbox mit Gleitsitzstruktur (100, 300) nach Anspruch 1, wobei die Lippe (127) der inneren Auskleidung (122) nicht in Kontakt mit der Lippe (117) der Außenschale (112) ist, wodurch ein Raum zwischen der Lippe (127) der inneren Auskleidung (122) und der Lippe (117) der Außenschale (112) definiert wird, wenn die innere Auskleidung (122) innerhalb der Außenschale (112) angeordnet ist.

## Revendications

1. Glacière jetable à double paroi et à montage par insertion (100, 300) comprenant :
un corps (110, 310) comprenant :
une enveloppe extérieure (112) comprenant une base (114), une pluralité de parois de support (116) reliées à la base (114), et un rebord (117) qui est formé aux extrémités distales des parois de support (116) loin de la base (114), la base (114) et la pluralité de parois de support (116) délimitant une cavité intérieure (118) ; et
un revêtement intérieur (122, 322) comprenant une base (124), une pluralité de parois de support (126) reliées à la base (124), et un rebord (127) qui s'étend sensiblement en direction horizontale à partir des parois de support (126) sur une extrémité distale par rapport à la base (124), la base (124) et la pluralité de parois de support (126) délimitant une cavité intérieure (128) et formant une ouverture (129) auprès de l'extrémité supérieure de la pluralité de parois de support (126), ledit revêtement intérieur (122, 322) étant disposé de façon amovible à l'intérieur de ladite enveloppe extérieure (112) et le rebord (127) du revêtement intérieur étant placé au-dessus de, et étant supporté par, une partie du rebord (117) de l'enveloppe extérieure ; et
un couvercle (150) destiné à recouvrir sensiblement l'ouverture (129) du revêtement intérieur (122, 322)
**caractérisée en ce que**
au moins un dudit corps (110, 310) et dudit couvercle (150) sont entièrement constitués d'un matériau jetable, biodégradable et recyclable à base de pâte à papier.

2. Glacière jetable à double paroi et à montage par insertion (100, 300) selon la revendication 1, dans laquelle une ou plusieurs de la pluralité de parois de support (116) sont reliées à la base (114) de façon continue et ininterrompue.

3. Glacière jetable à double paroi et à montage par insertion (100, 300) selon la revendication 1, dans laquelle ladite enveloppe extérieure (112) est fabriquée en une seule pièce et est en continu et ininterrompue.

4. Glacière jetable à double paroi et à montage par insertion (100, 300) selon la revendication 1, dans laquelle ledit revêtement intérieur (122, 322) est fabriqué en une seule pièce et est en continu et ininterrompu.

5. Glacière jetable à double paroi et à montage par insertion (100, 300) selon la revendication 1, dans laquelle ledit couvercle (150) est formé de façon qu'il est apte à rentrer à l'intérieur du rebord (117) de l'enveloppe extérieure (112) et à recouvrir l'ouverture (129) du revêtement intérieur (122, 322).

6. Glacière jetable à double paroi et à montage par insertion (100, 300) selon la revendication 1, dans laquelle le rebord (127) du revêtement intérieur (122, 322) s'étend vers l'extérieur à partir de la cavité intérieure (128) du revêtement intérieur (122, 322) et le rebord (117) de l'enveloppe extérieure (112) comprend :
une paroi horizontale de rebord (108) s'étendant en direction horizontale à partir des extrémités distales de chacune des parois de support (116) de l'enveloppe extérieure (112) et vers l'extérieur à partir de la cavité intérieure (118) de l'enveloppe extérieure (112) ; et
une paroi verticale de rebord (109) s'étendant en direction verticale à partir de l'extrémité de la paroi horizontale de rebord (108).

7. Glacière jetable à double paroi et à montage par insertion (100, 300) selon la revendication 1, dans laquelle ledit couvercle (150) est formé de façon que ses bords extérieurs sont sensiblement en affleurement avec le rebord (117) de l'enveloppe extérieure (112) lorsque le couvercle (150) au moins sensiblement recouvre l'ouverture (129) du revêtement intérieur (122, 322).

8. Glacière jetable à double paroi et à montage par insertion (100, 300) selon la revendication 1, dans laquelle une surface extérieure du couvercle (150) comprend un ou plusieurs porte-gobelets (151).

9. Glacière jetable à double paroi et à montage par insertion (100, 300) selon la revendication 1, dans laquelle le matériau jetable, biodégradable et/ou recyclable est un matériau à base de pâte à papier dérivée de papier recyclé.

10. Glacière jetable à double paroi et à montage par insertion (100, 300) selon la revendication 1, dans laquelle le matériau jetable, biodégradable et/ou recyclable est un matériau à base de pâte à papier constitué d'une combinaison de papier recyclé et de cire.

11. Glacière jetable à double paroi et à montage par insertion (100, 300) selon la revendication 1, dans laquelle le matériau jetable, biodégradable et/ou recyclable est un matériau à base de pâte à papier qui comporte un additif de cire.

12. Glacière jetable à double paroi et à montage par insertion (100, 300) selon la revendication 1, dans laquelle le matériau jetable, biodégradable et/ou recyclable est un matériau à base de pâte à papier qui est compostable.

13. Glacière jetable à double paroi et à montage par insertion (100) selon la revendication 1, dans laquelle un espace d'air (106) est formé entre ledit revêtement intérieur (122) et ladite enveloppe extérieure (112) dès lors que le revêtement intérieur (122) est disposé à l'intérieur de l'enveloppe extérieure (112) et le rebord (127) du revêtement intérieur (122) est placé au-dessus, et est en appui sur, une partie horizontale du rebord (117) de l'enveloppe extérieure (112).

14. Glacière jetable à double paroi et à montage par insertion (300) selon la revendication 1, dans laquelle la base (124) et la pluralité de parois de support (126)
du revêtement intérieur (322) sont en contact avec la base (114) et la pluralité de parois de support (116) de l'enveloppe extérieure (112) dès lors que le revêtement intérieur (322) est disposé à l'intérieur de l'enveloppe extérieure (112).

15. Glacière jetable à double paroi et à montage par insertion (300) selon la revendication 14, dans laquelle le rebord (127) du revêtement intérieur (322) est placé au-dessus de, et est en appui sur, une partie horizontale du rebord (117) de l'enveloppe extérieure (112).

16. Glacière jetable à double paroi et à montage par insertion (100, 300) selon la revendication 1, dans laquelle ledit couvercle (150) est destiné à recouvrir, et à être placé au-dessus et autour de, le rebord (117) de l'enveloppe extérieure (112).

17. Glacière jetable à double paroi et à montage par insertion (100, 300) selon la revendication 1, dans laquelle le rebord (127) du revêtement intérieur (122) n'est pas en contact avec le rebord (117) de l'enveloppe extérieure (112), de cette façon définissant un espace entre le rebord (127) du revêtement intérieur (122) et le rebord (117) de l'enveloppe extérieure (112) lorsque le revêtement intérieur (122) est disposé à l'intérieur de l'enveloppe extérieure (112).
